# EUROPEAN PATENT SPECIFICATION

(11) **EP 3 246 423 B1**
(45) Date of publication and mention of the grant of the patent: **18.12.2019**
(21) Application number: 16737465.1
(22) Date of filing: 15.01.2016
(51) Int. Cl.: C22C 29/10, C04B 35/56, G04B 37/22, C04B 35/626, C04B 35/63, C04B 35/638, C22C 1/05

(54) **CERMET DECORATIVE COMPONENT**
ZIERELEMENT AUS CERMET
COMPOSANT DÉCORATIF À BASE DE CERMET

(30) Priority: 16.01.2015 JP 2015006933
(43) Date of publication of application: 22.11.2017
(73) Proprietor: Kyocera Corporation, Kyoto-shi, Kyoto 612-8501 (JP)
(72) Inventor: NAKASUGA,Minoru, Kyoto-shi Kyoto 612-8501 (JP); MIKAKI,Shunji, Kyoto-shi Kyoto 612-8501 (JP)
(74) Representative: Viering, Jentschura & Partner mbB Patent- und Rechtsanwälte
(86) International application number: PCT/JP2016/051149
(87) International publication number: WO 2016/114394

(56) References cited:
- WO-A1-2012/121023
- GB-A- 806 496
- JP-A- H06 228 701
- JP-A- 2004 084 039
- JP-A- 2012 011 399
- JP-B2- 3 231 873
- US-A1- 2003 118 858
- US-A1- 2013 087 019

## Description

### Technical Field

The present invention relates to a cermet decorative component.

### Background Art

Conventionally, cermets in which a crystal phase of titanium carbide is bonded by a bonding phase made from a metal have been advantageously used as decorative components because they exhibit a color tone in the silver family and have excellent mechanical characteristics such as hardness and strength (refer to Patent Document 1).

### Citation List

### Patent Literature

Patent Document 1: Japanese Unexamined Patent Application Publication No. H6-228701A

GB 806,496 A discloses cemented carbides, especially for cutting tools, made by grinding TiC in an oxygen- and nitrogen-free medium, mixing therewith finely divided Mo and at least one iron group metal, compacting the mixture, and sintering it.

US 2013/087019 A1 discloses a lightweight material for decorative parts having a silver metallic color tone, the material including a sintered body having a main hard phase composed of a solid solution formed of titanium carbonitride and titanium carbide and a main binder phase composed of nickel.

### Summary of Invention

The invention provides a cermet decorative component according to claim 1. Preferred embodiments are described in the dependent claims.

### Description of Embodiments

In general, consumers need a sense of satisfaction in quality and esthetically pleasing look. For this reason, a cermet decorative component may be requested to have a color tone in the silver family, to have good mechanical characteristics such as hardness and strength, and to have low color variation among a plurality of pieces and within one piece constituting, for example, hands of a watch.

Description will be given below of an example of a cermet decorative component according to the present embodiments.

The cermet decorative component of the present embodiment is a titanium carbide based cermet containing a titanium carbide crystal phase and a metal bonding phase. An oxygen content of the component is not greater than 2.0 mass% and a nitrogen content of the component is not greater than 2.0 mass%. The cermet containing a titanium carbide crystal phase and a metal bonding phase exhibits a color tone in the silver family. Examples of the bonding phase include chromium, iron, cobalt, nickel, molybdenum, tungsten, and manganese.

A cermet is a sintered compact containing a titanium carbide crystal phase and a metal bonding phase. Conventional cermets contain greater than 2.0 mass% of each of oxygen and nitrogen, depending on raw materials or the manufacturing process. In contrast, the cermet decorative component of the present embodiment has an oxygen content of not greater than 2.0 mass% and a nitrogen content of not greater than 2.0 mass%, thereby resulting in low color variation. Therefore, the cermet decorative component of the present embodiment can provide the sense of satisfaction in quality and the esthetically pleasing look to consumers. The oxygen content and the nitrogen content are each preferably not greater than 0.8 mass%.

The color variation is small because formation of oxides and nitrides can be reduced due to the fact that the oxygen content and nitrogen content are each not greater than 2.0 mass%, where the formation of oxides and nitrides cause changes in color tone due to oxygen and nitrogen reacting with titanium carbide and reacting with the metal serving as the bonding phase. Furthermore, because the oxygen content and nitrogen content are each not greater than 2.0 mass%, not only color variation within a single cermet decorative component but also color variation due to differences in firing conditions can be improved by dulling color tone changes.

A method for measuring the oxygen (O) content and nitrogen (N) content in a cermet decorative component will be described below. First, the cermet decorative component is made into a powder by grinding. Then, oxygen content and nitrogen content are measured using a nitrogen/oxygen analyzer (e.g., TCH-600 manufactured by LECO Corporation). In this measurement, the oxygen content and nitrogen content of an unknown sample can be determined by fitting to a calibration curve created using standard samples having known oxygen or nitrogen content. In the present embodiment, the objects of measurement are the oxygen (O) content and nitrogen (N) content obtained by the above method, rather than the O₂ and N₂ content.

Color variation can be calculated using values measured according to JIS Z 8722-2000 in at least two locations of the cermet decorative component. Specifically, using a spectrophotometric colorimeter (CM-3700A manufactured by Konica Minolta Inc. or the like), measurement is carried out with a CIE standard light source D65 as a light source, a viewing angle of 10°, and a measurement range of 3 mm × 5 mm under specular component included (SCI) measurement conditions. Using the value of lightness factor L* and the values of psychometric chroma coordinates a* and b* in a CIE 1976 L*a*b* color space, color variation may be determined by the equation ΔE = [(ΔL*)² + (Δa*)² + (Δb*)²]^{1/2}.

When determining color variation within a single cermet decorative component, if the measurement locations are taken as position X and position Y, ΔL* is XL* - YL*, Δa* is Xa* - Ya*, and Δb* is Xb* - Yb*. When determining color variation due to differences in firing conditions, when comparing a sample under firing condition V and a sample under firing condition W, ΔL* is VL* - WL*, Δa* is Va* - Wa*, and Δb* is Vb* - Wb*. When there are two or more measurement locations, the maximum value and minimum value are used.

Here, the lightness factor L* is an index expressing the lightness of a color tone. If the value of the lightness factor L* is high, the color tone is light, and if the value of the lightness factor L* is low, the color tone is dark.

The psychometric chroma coordinate a* is an index expressing the position between red and green of a color tone. If the psychometric chroma coordinate a* is a large positive value, the color tone is in the red family, and if it is a large negative value, the color tone is in the green family.

The psychometric chroma coordinate b* is an index expressing the position between yellow and blue of a color tone. If the psychometric chroma coordinate b* is a large positive value, the color tone is in the yellow family, and if it is a large negative value, the color tone is in the blue family.

The absolute values of the psychometric chroma coordinates a* and b* are indices expressing the intensity of color tone. When the absolute values of the psychometric chroma coordinates a* and b* are high, it is an intense color tone, and when the absolute values of the psychometric chroma coordinates a* and b* are low, it is a subdued color tone.

In the cermet decorative component of the present invention, the lightness factor L* in the CIE 1976 L*a*b* color space is from 72 to 74, the psychometric chroma coordinate a* is from 1 to 2, and the psychometric chroma coordinate b* is from 0 to 1 on a surface having an arithmetic mean roughness Ra of not greater than 0.03 µm on the roughness curve. When it satisfies such conditions, the cermet decorative component of the present embodiment can provide the sense of high quality and the esthetically pleasing look demanded by consumers.

The arithmetic mean roughness Ra on the roughness curve may be measured using a stylus-type surface roughness gauge according to JIS B 0601-2001. Specifically, it can be determined by averaging the values measured in five locations with a measurement length of 5 mm, a cutoff value of 0.8 mm, a stylus tip diameter of 2 µm, and a stylus scan rate of 0.5 mm/sec.

As for constituents other than oxygen and nitrogen constituting the cermet decorative component of the present embodiment, for example, the content of chromium (Cr) is not less than 1.0 mass% and not greater than 10.0 mass% as converted to chromium carbide (Cr₃C₂), the content of molybdenum (Mo) is not less than 3.0 mass% and not greater than 10.0 mass% as converted to molybdenum carbide (Mo₂C), the content of nickel (Ni) is not less than 1.0 mass% and not greater than 20.0 mass%, and the balance is titanium carbide (TiC). In the description above, the reason that chromium and molybdenum are calculated as converted to carbides is to align with the manufacturing method examples described below, in which chromium carbide powder and molybdenum carbide powder are used in producing cermet decorative components. In the cermet decorative component of the present embodiment, it is not specified that chromium and molybdenum are present as chromium carbide and molybdenum carbide. It is more common in cermet decorative components for chromium and molybdenum to be present as metals than as carbides.

Furthermore, in the cermet decorative component of the present embodiment, the total content of aluminum (Al) and silicon (Si) is preferably not greater than 0.1 mass%. The content is preferably in the above ranges because the aluminum and silicon impart changes in hue due to forming compounds with oxygen, nitrogen, and the like.

When the cermet decorative component contains chromium within the above range, corrosion resistance can be improved and reddishness of the color tone of the cermet decorative component can be improved. When the cermet decorative component contains molybdenum within the above range, a dense sintered compact (cermet) can be obtained due to improvement in sinterability. When the cermet decorative component contains nickel within the above range, corrosion resistance can be improved, and a dense sintered compact (cermet) can be obtained due to improvement in sinterability. When the cermet decorative component contains chromium, molybdenum, and nickel in the above ranges, it can bond firmly to the titanium carbide crystal phase due to its good wettability to the titanium carbide crystal phase.

When determining the content of each constituent, first, the respective contents of chromium (Cr), molybdenum (Mo), and nickel (Ni) are determined using a fluorescent X-ray analyzer (XRF) or an ICP emission spectrophotometer (ICP). Then, chromium (Cr) is converted to chromium carbide (Cr₃C₂), and molybdenum (Mo) is converted to molybdenum carbide (Mo₂C). No conversion is necessary for nickel (Ni). The content of titanium carbide can be calculated by subtracting the content of chromium carbide, molybdenum carbide, and nickel from 100 mass%.

Furthermore, the presence of compounds, e.g., titanium carbide, that constitute the cermet decorative component may be identified by comparing the results obtained by measurement using an X-ray diffractometer (XRD) with JCPDS cards. The presence of the metal bonding phase on the periphery of the titanium carbide crystal phase is ascertained by observing a surface (e.g., a mirror-finished surface) of the cermet decorative component using a metallurgical microscope or a scanning electron microscope (SEM). Furthermore, it is preferred that oxygen and nitrogen be present in a dispersed state in the cermet decorative component of the present embodiment. The state of dispersion can be observed using an electron probe microanalyzer (EPMA).

The cermet decorative component made from not less than 1.0 mass% and not greater than 10.0 mass% of chromium (Cr) as converted to chromium carbide (Cr₃C₂), not less than 3.0 mass% and not greater than 10.0 mass% of molybdenum (Mo) as converted to molybdenum carbide (Mo₂C), not less than 1.0 mass% and not greater than 20.0 mass% of nickel (Ni), not greater than 2.0 mass% of oxygen and nitrogen and the balance titanium carbide has Hv hardness of not less than 16 GPa, has mechanical characteristics sufficient for practical use, and is resistant to scratching and deformation. Hv hardness may be measured according to JIS R 1610-2003. When cutting out the test piece conforming to JIS R 1601-2008, three-point bending strength is not less than 980 MPa.

Furthermore, the mean distance between centers of gravity of the titanium carbide crystal phases is preferably not greater than 2.0 µm. When such a configuration is satisfied, the cermet decorative component has little color variation while having excellent mechanical characteristics because the size and arrangement of the titanium carbide crystal phases are optimized. Note that since the mean distance between centers of gravity is the distance between the centers of gravity of the titanium carbide crystal phases, it cannot be smaller than the average crystal phase size.

Furthermore, the standard deviation of distance between centers of gravity of the titanium carbide crystal phases is preferably not greater than 0.7 µm. When such a configuration is satisfied, color variation becomes even smaller.

The mean distance between centers of gravity and the standard deviation of distances between centers of gravity may be determined by taking photographs by SEM at 5000X magnification of a mirror-finished surface of the cermet decorative component, reading in the image data, and performing image analysis by applying the distance between centers of gravity technique of image analysis software "Azo-kun" (trade name; manufactured by Asahi Kasei Engineering Corporation). Here, as the analysis conditions, for example, the lightness of particles may be set to dark, the binarization method set to manual, the small figure removal set to 0.01 µm, and the threshold value set to 102.

Furthermore, the porosity per unit area of the cermet decorative component of the present embodiment when looking at pores having an equivalent circle diameter of not less than 0.4 µm is preferably not greater than 0.5 area %, and the average pore size is preferably not greater than 1.2 µm. When such a configuration is satisfied, the cermet decorative component of the present embodiment can provide the sense of high quality and the esthetically pleasing look demanded by consumers because there is little color variation due to the presence of pores.

Here, the methods for ascertaining porosity per unit area and average pore size will be described. First, the measurement surface is a surface mirror-polished to a depth of 10 µm from the surface of a sintered compact serving as a cermet decorative component.

The measurement surface is observed by metallurgical microscope or SEM, images are taken by CCD camera, and porosity per unit area may be determined using image analysis software. Here, WinROOF software manufactured by Mitani Corporation, for example, is used as the image analysis software. Measurement conditions are a measurement area of 5.7043 × 10⁻² mm² per measurement and an equivalent circle diameter threshold of 0.4 µm. The porosity per unit area and the average pore size may be determined by measuring at least four locations. Specifically, the results obtained in this manner are the porosity per unit area and the average pore size of an area measuring 2.28172 × 10⁻¹ mm².

The cermet decorative component of the present embodiment can provide a sense of high quality and an esthetically pleasing look to consumers due to little color variation. Thus, it can be advantageously used as a decorative component, such as decorative components for watches such as a bezel or band piece; decorative components for mobile phones such as various operation keys and buttons; decorative components for fishing line guides such as fishing line guide rings; decorative components for personal accessories such as brooches, necklaces, earrings, rings, necktie pins, tie tacks, medals, and buttons; decorative components for construction materials such as door handles and decorative tiles for floors, walls, and ceilings; decorative components for kitchen utensils such as spoons and forks; decorative components for other appliances; and decorative components for vehicles such as emblems.

Next, an example of a manufacturing method of the cermet decorative component of the present embodiment will be described.

First, prescribed quantities of titanium carbide powder having an average particle size of from 0.5 to 3.0 µm, chromium carbide powder having an average particle size of from 0.5 to 3.0 µm, molybdenum carbide powder having an average particle size of from 0.5 to 3.0 µm, and nickel powder having an average particle size of from 5.0 to 20.0 µm are weighed out. Specifically, they are weighed out so that chromium carbide powder is from 1.0 to 10.0 mass%, molybdenum carbide powder is from 3.0 to 10.0 mass%, nickel powder is from 1.0 to 20.0 mass%, and titanium carbide powder is not less than 70 mass% and are used as a starting raw material.

Then, the starting raw materials and water or methanol as a solvent are placed into a mill, where they are mixed and ground for not less than 24 hours to make a slurry. Note that sinterability can be improved by adding at least one among manganese powder, iron powder, cobalt powder, tungsten powder, chromium powder, and molybdenum powder.

The mean distance between centers of gravity of the titanium carbide crystal phases can be set to not greater than 2.0 µm by using a raw material powder obtained by preparing titanium carbide powder having an average particle size of from 0.6 to 1.5 µm and sieving it with sieves capable of classifying D₉₀ in the titanium carbide powder.

Furthermore, the standard deviation of distance between centers of gravity of the titanium carbide crystal phases can be set to not greater than 0.7 µm by using a raw material powder obtained by preparing titanium carbide powder having an average particle size of from 0.8 to 1.3 µm and sieving it with sieves capable of classifying D₁₀ and D₉₀ in the titanium carbide powder.

Next, a prescribed quantity of binder is added to the obtained slurry, which is then spray-dried to produce granules. Then, these granules are molded into a desired shape, such as a round plate, flat plate, or torus, using a desired molding method, such as dry pressing, cold isostatic pressing, or extrusion molding. If the shape of the cermet decorative component is complex, injection molding may also be used as the molding method. A powder compact is obtained by machining as necessary after molding.

A degreased compact is obtained by degreasing the powder compact in a pressure degreasing furnace. Degreasing is performed in a nitrogen gas atmosphere while maintaining a temperature of from 310 to 390°C and a pressure of from 30 to 60 kPa. After degreasing is finished, evacuation is performed for not less than 30 minutes and not greater than 120 minutes. The nitrogen content present in the degreased compact can be reduced by performing evacuation after degreasing in this manner. When evacuation is not performed after degreasing is finished or if the evacuation time is less than 30 minutes, the nitrogen content of the cermet decorative component cannot be set to not greater than 2.0 mass%. Furthermore, the upper limit of evacuation time is 120 minutes because the nitrogen content does not substantially change beyond 120 minutes.

Next, the degreased compact is housed in a ceramic container, and held for not less than 30 minutes and not greater than 90 minutes in vacuum of not greater than 1.33 Pa at from 400 to 600°C when increasing the temperature. It is then sintered at from 1200 to 1500°C to produce a sintered compact. By holding for not less than 30 minutes and not greater than 90 minutes at from 400 to 600°C when increasing the temperature, the oxygen and nitrogen remaining in the degreased compact react to become carbon dioxide gas which escapes from the degreased compact, and the oxygen content can be reduced. When the hold time at from 400 to 600°C is less than 30 minutes, the oxygen content of the cermet decorative component cannot be set to not greater than 2.0 mass%. Furthermore, the upper limit of hold time is 90 minutes because the oxygen content does not substantially change beyond 90 minutes.

Then, a cermet decorative component can be obtained by implementing shape processing, surface processing, and the like so as to form the obtained sintered compact into a desired shape.

Furthermore, to set the arithmetic mean roughness Ra on the roughness curve to not greater than 0.03 µm, lap processing may be performed on the surface of the sintered compact using a tin lapping plate while supplying diamond abrasive grains having an average particle size of not greater than 1 µm. Additionally, barrel polishing may be performed as necessary. In wet barrel polishing, the sintered compact may be tumbled in a rotary barrel polisher for not less than 24 hours using green carborundum (GC) as a medium.

Hereinafter, examples of the present invention will be specifically described. However, the present embodiment is not limited to these examples.

### Example 1

First, titanium carbide powder having an average particle size of 1.0 µm, chromium carbide powder having an average particle size of 1.5 µm, molybdenum carbide powder having an average particle size of 2.0 µm, and nickel powder having an average particle size of 12.0 µm were prepared. They were weighed out such that titanium carbide powder was 81.0 mass%, chromium carbide powder was 5.0 mass%, molybdenum carbide powder was 6.5 mass%, and nickel powder was 7.5 mass%, and were used as starting raw materials. Then, the starting raw materials and methanol as a solvent were placed into a mill, and mixed and ground for 48 hours to produce a slurry.

Next, a prescribed quantity of binder was added to the obtained slurry, which was then spray-dried to produce granules. After pressure molding these granules at 98 MPa, machining was performed to produce a powder compact.

Then, the powder compact was placed in a pressure degreasing furnace and degreased at a temperature of 350°C and a pressure of 45 kPa in a nitrogen gas atmosphere, and then evacuation was performed. The evacuation time was set to the time shown in Table 1.

Next, the degreased compact was housed in a ceramic container, and held for the time shown in Table 1 in vacuum of not greater than 1.33 Pa at 500°C when increasing the temperature. It was then sintered at 1350°C to produce a sintered compact.

Then, lapping was performed using the obtained sintered compact and a tin lapping plate while supplying diamond abrasive grains having an average particle size of not greater than 1 µm. It was polished so that an arithmetic mean roughness Ra on the roughness curve is not greater than 0.03 µm, to produce sample nos. 1 to 14.

Then, a portion of each sample was ground, and the contents of chromium (Cr), molybdenum (Mo), and nickel (Ni) were determined using ICP, and chromium (Cr) was converted to chromium carbide (Cr₃C₂) and molybdenum (Mo) to molybdenum carbide (Mo₂C). As a result, it was confirmed that the contents were as originally weighed out. Furthermore, a portion of each sample was ground, and the oxygen content and nitrogen content were determined using a nitrogen/oxygen analyzer (TCH-600 manufactured by LECO Corporation). The results are shown in Table 1.

Specifically, using a spectrophotometric colorimeter (CM-3700A manufactured by Konica Minolta Inc. or the like), the light source was set to a CIE standard light source D65, the viewing angle was set to 10°, and the measurement range was set to 3 mm × 5 mm. The values of light L* and psychometric chroma coordinates a* and b* in the CIE 1976 L*a*b* color space of respective samples were measured according to JIS Z 8722-2000 under specular component included (SCI) measurement conditions.

Measurement was carried out in five locations on each sample, and the color variation (ΔE) was determined from the equation ΔE = [(ΔL*)² + (Δa*)² + (Δb*)²]^{1/2} using the respective maximum values and minimum values of L*, a*, and b*. The results are shown in Table 1.

Additionally, for each of the samples, five men and five women in each age group of twenties, thirties, forties, and fifties, for a total of 40 monitors, were surveyed by questionnaire in regard to sense of high quality and esthetically pleasing look. The sample was evaluated as "A" in the case where the proportion of monitors responding "yes" to both items was not less than 80%. "B" in the case of one item, and "C" in the case of neither item.

The results are shown in Table 1.

**[Table 1]**

| Sample no. | Evacuation (min) | 400 to 600°C | Oxygen (mass%) | Nitrogen (mass%) | L* | a* | b* | ΔE | Monitor evaluation |
|---|---|---|---|---|---|---|---|---|---|
| 1* | 80 | 90 | 0.05 | 0.6 | 77 | 0 | 2 | 0.4 | B |
| 2 * | 80 | 85 | 0.1 | 0.6 | 76 | 1 | 1 | 0.5 | B |
| 3 | 80 | 65 | 0.7 | 0.6 | 74 | 1 | 1 | 0.8 | A |
| 4 | 80 | 50 | 1.0 | 0.6 | 72 | 1 | 1 | 1.2 | A |
| 5* | 80 | 30 | 2.0 | 0.6 | 70 | 2 | 0 | 2.5 | B |
| 6* | 80 | 25 | 2.1 | 0.6 | 66 | 2 | -2 | 3.9 | C |
| 7* | 120 | 65 | 0.7 | 0.05 | 77 | 0 | -1 | 0.4 | B |
| 8* | 100 | 65 | 0.7 | 0.1 | 75 | 1 | -1 | 0.6 | B |
| 9 | 50 | 65 | 0.7 | 1.0 | 73 | 2 | 0 | 1.3 | A |
| 10* | 30 | 65 | 0.7 | 2.0 | 71 | 3 | 1 | 2.5 | B |
| 11* | 20 | 65 | 0.7 | 2.1 | 67 | 5 | 1 | 3.8 | C |
| 12* | 120 | 90 | 0.05 | 0.05 | 76 | 1 | 0 | 0.3 | B |
| 13* | 20 | 25 | 2.1 | 2.1 | 64 | 6 | -3 | 4.8 | C |
| 14 | 60 | 60 | 0.8 | 0.8 | 74 | 2 | 1 | 1.0 | A |

| | | | | | | | | | |
|---|---|---|---|---|---|---|---|---|---|
| *: samples out of the invention | | | | | | | | | |

From Table 1, it was found that sample nos. 1 to 5, 7 to 10, 12, and 14 had a lower ΔE value than those of sample nos. 6, 11, and 13, and of the total of 100 mass% of all components constituting the cermet, the oxygen content was not greater than 2.0 mass% and the nitrogen content was not greater than 2.0 mass%, and as a result, there was little color variation. When Hv hardness of each sample was measured according to JIS R 1610-2003, the Hv hardness values of sample nos. 1 to 5, 7 to 10, 12, and 14 were greater than those of sample nos. 6, 11, and 13, and were not less than 16 GPa.

The monitor evaluation was A for sample nos. 3, 4, 9, and 14, and the lightness factor L* in the CIE 1976 L*a*b* color space was from 72 to 74, the psychometric chroma coordinate a* was from 1 to 2, and the psychometric chroma coordinate b* was from 0 to 1 on a surface having an arithmetic mean roughness Ra of not greater than 0.03 µm on the roughness curve. As a result, they can provide a sense of high quality and an esthetically pleasing look to consumers.

### Example 2

Titanium carbide powder used for sample no. 9 in Example 1 was prepared. Then, powder A in which D₉₀ in this titanium carbide powder has been excluded was obtained. Furthermore, powder B in which D₉₀ and D₁₀ in the same titanium carbide powder have been excluded was obtained. Then, titanium carbide powder having a wider particle size distribution than that of sample no. 9 was prepared, and this was used as powder C. Additionally, titanium carbide powder having a wide particle size distribution was prepared, and this was used as powder D.

Samples were prepared by the same method as the method used when producing sample no. 9 of Example 1, except that powder A was used in sample no. 15, powder B in sample no. 16, powder C in sample no. 17, and powder D in sample no. 18.

Color variation (ΔE) of each sample was determined by the same method as Example 1, and the samples were ranked in ascending order and shown in Table 2.

Additionally, using photographs of each of the samples taken by SEM at 5000X magnification, the image data was read in and image analysis was performed by applying the distance between centers of gravity technique of image analysis software "Azo-kun" (trade name; manufactured by Asahi Kasei Engineering Corporation). Here, as the analysis conditions, for example, the lightness of particles was set to dark, the binarization method was set to manual, the small figure removal was set to 0.01 µm, and the threshold value was set to 102. The mean distance between centers of gravity and the standard deviation of distance between centers of gravity are shown in Table 2.

**[Table 2]**

| Sample no. | Mean distance between centers of gravity of titanium carbide crystal phases (µm) | Standard deviation of distance between centers of gravity of titanium carbide crystal phases (µm) | ΔE rank |
|---|---|---|---|
| 15 | 1.4 | 0.8 | 2 |
| 16 | 1.5 | 0.7 | 1 |
| 17 | 2.0 | 1.0 | 3 |
| 18 | 2.2 | 1.2 | 4 |

From Table 2, it was found that color variation was small due to the mean distance between centers of gravity of the titanium carbide crystal phases being not greater than 2.0 µm. It was also found that color variation was small due to the standard deviation of distance between centers of gravity of the titanium carbide crystal phases being not greater than 0.7 µm.

## Claims

1. A titanium carbide based cermet decorative component comprising a titanium carbide crystal phase and a metal bonding phase, the component having an oxygen content of not greater than 2.0 mass% and a nitrogen content of not greater than 2.0 mass%, which can be determined by using a nitrogen/oxygen analyzer (e.g. TCH-600, manufactured by the LECO Corporation), wherein the cermet is first made into a powder by grinding, **characterised in that**
a lightness factor L* in a CIE 1976 L*a*b* color space is from 72 to 74, a psychometric chroma coordinate a* is from 1 to 2, and a psychometric chroma coordinate b* is from 0 to 1 on a surface of the component, which can be determined according to JIS Z 8722-2000, using a spectrophotometric colorimeter (e.g. CM-3700A, manufactured by the Konica Minolta Inc.), the surface having an arithmetic mean roughness Ra of not greater than 0.03 µm on a roughness curve, which can be determined determined according to JIS B 0601-2001, using a stylus-type surface roughness gauge.

2. The cermet decorative component according to claim 1 , wherein a mean distance between centers of gravity of the titanium carbide crystal phases is not greater than 2.0 µm, which can be determined by taking photographs by SEM at 5000X magnification of a mirror-finished surface of the cermet decorative component using image analysis software (e.g. "Azo-kun", manufactured by the Asahi Kasei Engineering Corporation).

3. The cermet decorative component according to claim 2, wherein a standard deviation of distance between centers of gravity of the titanium carbide crystal phases is not greater than 0.7 µm

## Patentansprüche

1. Ein titancarbidbasiertes-Cermet-Zierelement, aufweisend eine Titancarbid-Kristallphase und eine Metallbindephase, wobei das Element einen Sauerstoffgehalt von nicht größer als 2,0 Masse-% und einen Stickstoffgehalt von nicht größer als 2,0 Masse-% aufweist, wobei diese unter Verwendung eines Stickstoff/Sauerstoff-Analysators (z.B. TCH-600, hergestellt von der LECO Corporation) ermittelt werden können, wobei das Cermet zuerst durch Mahlen zu einem Pulver verarbeitet wird,
**dadurch gekennzeichnet, dass**
ein Helligkeitsfaktor L* in einem CIE 1976 L*a*b*-Farbraum 72 bis 74 beträgt, eine psychometrische Farbkoordinate a* 1 bis 2 beträgt und eine psychometrische Farbkoordinate b* 0 bis 1 beträgt, auf einer Oberfläche des Elements, was gemäß JIS Z 8722-2000 unter Verwendung eines spektrofotometrischen Kolorimeters (z.B. CM-3700A, hergestellt von der Konica Minolta Inc.) ermittelt werden kann, wobei die Oberfläche einen arithmetischen Mittelrauwert Ra von nicht größer als 0,03 µm auf einer Rauigkeitskurve aufweist, was gemäß JIS B 0601-2001 mittels eines Oberflächenrauheitsmessgeräts des Tasttyps ermittelt werden kann.

2. Das Cermet-Zierelement gemäß Anspruch 1,
wobei ein mittlerer Abstand zwischen Schwerpunkten der Titancarbid-Kristallphasen nicht größer als 2,0 µm ist, wobei dies ermittelt werden kann durch REM-Fotografieren mit einer 5000fachen Vergrößerung einer hochglanzpolierten Oberfläche des Cermet-Zierelements unter Verwendung von Bildanalysesoftware (z.B. "Azo-kun", hergestellt von der Asahi Kasei Engineering Corporation).

3. Das Cermet- Zierelement gemäß Anspruch 2,
wobei eine Standardabweichung des Abstands zwischen Schwerpunkten der Titancarbid-Kristallphasen nicht größer als 0,7 µm ist.

## Revendications

1. Un élément décoratif en cermet à base de carbure de titane comprenant une phase cristalline de carbure de titane et une phase de liaison métallique, ledit élément ayant une teneur en oxygène non supérieure à 2,0% en masse et une teneur en azote non supérieure à 2,0% en masse, ce qui peut être déterminé en utilisant un analyseur azote/oxygène (par exemple TCH-600 fabriqué par LECO Corporation), où ledit cermet est d'abord traité en poudre par broyage,
**caractérisé en ce que**
un facteur de luminosité L* dans un espace colorimétrique CIE 1976 L*a*b* est de 72 à 74, une coordonnée de teinte psychométrique a* est de 1 à 2, et une coordonnée de teinte psychométrique b* est de 0 à 1, sur une surface de l'élément, ce qui peut être déterminé selon JIS Z 8722-2000 en utilisant un colorimètre spectrophotométrique (par exemple CM-3700A fabriqué par Konica Minolta Inc.), la surface ayant une rugosité moyenne arithmétique Ra non supérieure à 0,03 µm sur une courbe de rugosité, ce qui peut être déterminé conformément à JIS B 0601-2001 moyennant un rugosimètre de type contact.

2. L'élément décoratif en cermet selon la revendication 1,
dans lequel une distance moyenne entre les centres de gravité des phases cristallines de carbure de titane n'est pas supérieure à 2,0 µm, ce qui peut être déterminé par photographie SEM avec un grossissement de 5000 fois d'une surface hautement polie de l'élément décoratif en cermet moyennant un logiciel d'analyse d'image (par exemple "Azo-kun" fabriqué par Asahi Kasei Engineering Corporation).

3. L'élément décoratif en cermet selon la revendication 2,
dans lequel un écart standard de la distance entre les centres de gravité des phases cristallines de carbure de titane n'est pas supérieur à 0,7 µm.
